# EUROPEAN PATENT APPLICATION

(11) **EP 1 099 800 A1**
(43) Date of publication of application: **16.05.2001**
(21) Application number: 00203649.9
(22) Date of filing: 19.10.2000
(51) Int. Cl.: E02F 9/20, B60T 7/10, G05G 5/18

(54) **Control lever**

(30) Priority: 09.11.1999 IT BO990607
(71) Applicant: NEW HOLLAND ITALIA S.p.A., I-41100 Modena (IT)
(72) Inventor: Sola, Giancarlo, 41100 Modena (IT)
(74) Representative: Vandenbroucke, Alberic

(57) **Abstract**

A control lever is mounted to rotate about a given axis (8), and has a locking device (9) for locking the lever in a given angular position. The locking device (9) can be moved between a lock position and a release position by a sliding rod (17). A handle (4) in which the sliding rod (17) is housed presents a curved configuration allowing the height of the control lever to be reduced thereby forming a lesser obstruction for a vehicle operator. The sliding rod (17) comprises a flexible portion (25) to get around the curve in the handle (4) while still being able to axially actuate the locking device (9).

## Description

The present invention relates to a control lever and may be used to particular advantage for activating handbrakes of earth-moving vehicles, to which the following description refers purely by way of example. The invention however also can be used on agricultural tractors or any other kind of vehicle having control levers.

A handbrake control lever normally comprises an elongated handle member or casing, mounted to rotate about a given axis, to and from a raised operative position in which a vehicle is braked. The lever further comprises locking means for angularly locking the casing in a given angular position and a rigid actuating rod connected in axially-sliding manner to the casing to move the locking means between a lock position and a release position respectively locking and releasing the elongated member.

Since the actuating rod must have a substantially straight longitudinal axis, to enable it to be stressed axially, and must also be of at least a given minimum length to enable easy angular displacement of the elongated member by the user, known control levers of the above type are fairly bulky and, when in the raised braking position, may limit the freedom of movement of the user.

It is therefore an object of the present invention to provide a control lever designed to eliminate the aforementioned drawbacks.

According to the present invention, a control lever is provided comprising :
- a handle member mounted to rotate about a given axis;
- locking means for angularly locking the member in a given angular position; and
- actuating means for moving said locking means between a lock position and a release position respectively locking and releasing said member; said actuating means comprising a rod connected in axially-sliding manner to the member.

The lever is characterized in that said rod comprises at least one flexible portion.

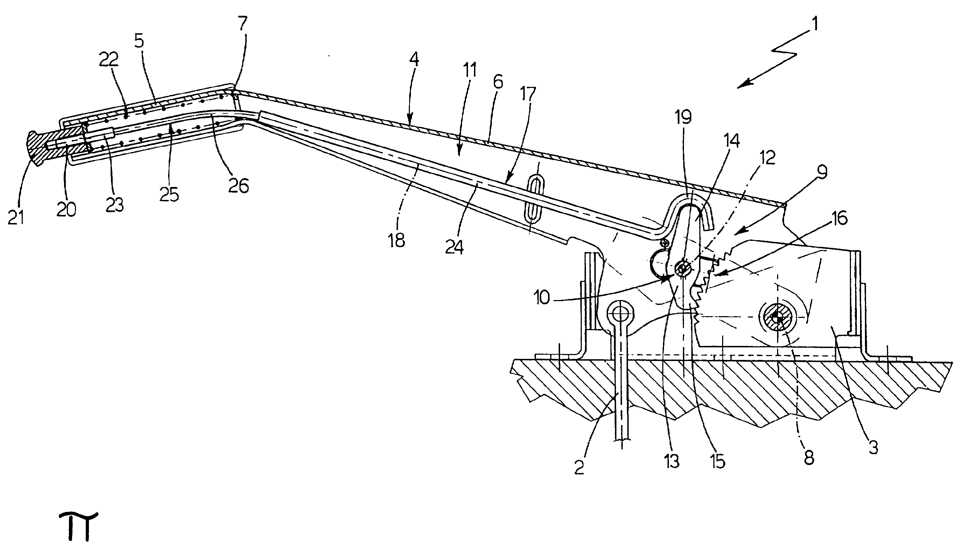

The present invention will be described with reference to the accompanying drawing, which shows a partly sectioned side view of a non-limiting embodiment.

Reference number 1 in the accompanying drawing indicates as a whole a control lever for controlling an actuating member 2 of a handbrake (not shown). Lever 1 comprises a fixed supporting element 3 and a curved, elongated, downwardly-concave member or casing 4, which represents the handle of lever 1. The handle 4 in turn comprises two substantially straight portions 5, 6 and a curved portion 7 connecting portions 5 and 6. Portions 5 and 6 are coplanar with each other and with a plane π defined by the plane of the accompanying drawing. In an alternative embodiment not shown, portion 5 forms an angle other than zero with plane π.

Handle 4 is connected in rotary manner to support 3 so as to rotate, with respect to support 3, about an axis 8 oriented perpendicular to the plane of the accompanying drawing.

Lever 1 further comprises a locking device 9 for angularly locking handle 4 in a chosen position. The locking device 9 in turn comprises a bell crank lever or rocker arm 10 fitted in rotary manner to handle 4 allowing rotational movement about an axis 12 parallel to axis 8 under the influence of an actuating device 11. Rocker arm 10 has a first arm 13 and a second arm 14, and is movable between a lock position (shown in the drawing) in which the free end 15 of arm 13 engages a sector gear 16 formed on the outer surface of element 3, and a release position (not shown) in which end 15 is positioned a given distance away from sector gear 16.

Actuating device 11 comprises a rod 17 which has a longitudinal axis 18. The rod 17 is housed in axially-sliding manner inside handle 4 and has a substantially U-shaped, downwardly-concave first free end 19 for engagingly extending over arm 14 of rocker arm 10. Rod 17 also has a second free end 20, which is fitted with a user-operated pushbutton 21 for moving rod 17 axially towards element 3, counteracting the force of a spring 22 housed inside handle 4. As such, rod 17 is moved coaxially with axis 18, thereby moving rocker arm 10 into the release position.

Since handle 4 comprises the curved portion 7, rod 17 also comprises two rigid, substantially straight portions 23, 24, and a curved portion 25 connecting portions 23 and 24. Portion 25 is connected in angularlyand axially-fixed manner to portions 23 and 24, extends at least partly along curved portion 7, and is flexible to enable rod 17 to transmit axial forces. More specifically, portion 25 is composed of a known cable 26 (in casu a push-pull cable) preferably comprising an internal, braided metal wire and a metal foil coiled around the metal wire.

Cable 26 therefore enables the use of a curved rod 17 nevertheless capable of transmitting axial forces even when housed inside a handle 4 which deviates from a straight configuration. Consequently, since handle 4 can be curved downwardly, the total height of lever 1 is reduced and is relatively low, even when lever 1 is in the raised, operative position activating the handbrake. As such, the lever 1 forms a lesser obstruction for the vehicle operator compared to known, fully straight levers.

## Claims

1. A control lever comprising :
- a handle member (4) mounted to rotate about a given axis (8);
- locking means (9) for angularly locking the member (4) in a given angular position; and
- actuating means (11) for moving said locking means (9) between a lock position and a release position respectively locking and releasing said member (4); said actuating means (11) comprising a rod (17) connected in axially-sliding manner to the member (4); and
characterized in that said rod (17) comprises at least one flexible portion (25).

2. A lever according to claim 1, characterized in that said rod (17) comprises at least one rigid portion (23, 24).

3. A lever according to claim 2, characterized in that said rod (17) comprises two rigid portions (23, 24); said flexible portion (25) being located between the two rigid portions (23, 24).

4. A lever according to any of the preceding claims, characterized in that said rod (17) comprises a longitudinal axis (18); said flexible portion (25) being formed in a manner such as to transmit a force directed along said longitudinal axis (18).

5. A lever according to any of the preceding claims, characterised in that said flexible portion (5) comprises a braided metal wire and a foil coiled around the metal wire.

6. A lever according to any of the preceding claims, characterized in that said member (4) comprises a first (5) and second (6) substantially straight portion, and a curved third portion (7) connecting said first (5) and said second (6) portion; said flexible portion (25) being located at least along said third portion (7).

7. A lever according to claim 6, characterized in that said first (5) and said second (6) portion are coplanar with each other.

8. A lever according to claim 6, characterized in that said second portion (6) lies in a given plane (π); said first portion (5) forming an angle other than zero with said plane (π).
